# EUROPÄISCHE PATENTSCHRIFT

(11) **EP 1 008 632 B1**
(45) Veröffentlichungstag und Bekanntmachung des Hinweises auf die Patenterteilung: **20.10.2004**
(21) Anmeldenummer: 99122241.5
(22) Anmeldetag: 08.11.1999
(51) Int. Cl.: C09D 5/44, C09D 7/12

(54) **Haftungsverbesserer für Lackschichten**
Adhesion promoter for paint layers
Promoteur d'adhésion pour couches de peinture

(30) Priorität: 17.11.1998 AT 190498
(43) Veröffentlichungstag der Anmeldung: 14.06.2000
(73) Patentinhaber: DuPont Performance Coatings GmbH & Co. KG, 42285 Wuppertal (DE)
(72) Erfinder: Hönig, Helmut, 8062 Kumberg (AT); Thausz, Robert, 8041 Graz (AT)

(56) Entgegenhaltungen:
- EP-A- 0 415 593
- DATABASE WPI Section Ch, Week 198830 Derwent Publications Ltd., London, GB; Class A14, AN 1988-209882 XP002184577 & JP 63 146971 A (SHIMIZU KK), 18. Juni 1988 (1988-06-18)

## Beschreibung

Eine wichtige Eigenschaft von Lackschichten, die durch das Verfahren der kathodischen Elektrotauchlackierung (KTL) auf leitfähige Substrate abgeschieden werden, ist ihre Haftung auf dem Substrat selbst, und die Haftung der nachfolgenden Lackschichten. Üblicherweise werden bei der Lackierung von Automobilkarossen vielfältige unterschiedliche Materialien auf der mit Hilfe des KTL-Verfahrens applizierten und durch Einbrennen ausgehärteten Lackschicht aufgebracht, Beispiel sind Füller, Decklacke, Kunststoffe auf Basis von Polyvinylchlorid (als Unterbodenschutz, Nahtabdichtungen, Antidröhnmassen usw.), Montage-Klebstoffe für Fenster oder Zierleisten usw.

Soweit diese Materialien direkt mit der KTL-Schicht Kontakt haben, ist es notwendig, eine sehr gute Haftung zu haben. Bevorzugt ist, daß die KTL-Schicht zu allen diesen Materialien gleichzeitig eine gute Haftung hat, da von vornherein alle Materialien in Betracht kommen können. Wenn die Bindemittelharze auf Grund besonderer Anforderungen z. B. an die mechanischen Eigenschaften der Lackschichten weiterentwickelt werden, können dabei auch die Haftungseigenschaften in negativer Weise verändert werden.

Es bestand daher die Aufgabe, nach Wegen zu suchen, die Haftungseigenschaften von KTL-Schichten unabhängig von der speziellen Wahl des Bindemittelharzes gezielt zu verbessern.

Diese Aufgabe wurde gelöst durch die Entwicklung eines Zusatzmittels, das bereits bei geringer Einsatzmenge die Haftungseigenschaften der KTL-Schicht deutlich gegenüber allen eingesetzten Materialien verbessert.

Elektrotauchlackbäder enthaltend Acrylatcopolymerisate, die durch Copolymerisation von C₆-C₁₀-Alkyl(meth)acrylaten, z.B. 2-Ethylhexylacrylat, und C₁-C₁₀-Amino(meth)acrylaten mit primären, sekundären oder tertiären Aminogruppen, zum Beispiel N,N-Dimethylaminoethylacrylat, erhalten werden, sind bekannt aus EP-A-0 415 593.

Elektrotauchlackbäder, die Acrylat-Copolymerisate enthalten, die durch Polymerisation von Diaminoethylmethacrylat, 2-Hydroxyethylacrylat, n-Butylacrylat, 2-Ethylhexylacrylat, Styrol und Methylmethacrylat erhalten werden, sind bekannt aus JP-A-63146971. Überraschenderweise wurde nun gefunden, daß die in der Österreichischen Patentanmeldung A-775/98 beschriebenen Antikratermittel dann zu deutlich verbesserten Haftungseigenschaften von anderen Materialien auf der KTL-Schicht führen, wenn sie durch Copolymerisation mit Aminogruppen-haltigen Acrylat- oder Methacrylat-Monomeren mit Säuren neutralisierbar und damit wasserverdünnbar gemacht werden.

Gegenstand der Erfindung ist daher ein Verfahren zur Verbesserung der Haftung auf Lackschichten, die durch Elektrotauchlackierung mit kationisch abscheidbaren Bindemitteln auf leitfähigen Substraten und nachfolgende Trocknung und Vernetzung appliziert werden, dadurch gekennzeichnet, daß Acrylat-Copolymerisate **A** als Zusatz in die Elektrotauchlackbäder eingebracht werden.

Als Acrylat-Copolymerisate **A** werden vorzugsweise solche Polymerisate eingesetzt, die erhältlich sind durch radikalisch initiierte Copolymerisation von
- **A1**: Alkyl(meth)acrylaten mit einem linearen, verzweigten oder cyclischen Alkylrest mit 6 bis 10 Kohlenstoffatomen, gegebenenfalls
- **A2**: Hydroxyalkyl(meth)acrylaten mit einem linearen, verzweigten oder cyclischen Alkylrest mit 1 bis 10 Kohlenstoffatomen und mindestens einer Hydroxylgruppe, und
- **A3**: Amino(meth)acrylaten mit einem linearen, verzweigten oder cyclischen Alkylrest mit 2 bis 10 Kohlenstoffatomen und mindestens einer primären, sekundären oder tertiären Aminogruppe.

Die Massenanteile der Monomeren in der Monomermischung betragen bevorzugt für
- **A1**: 50 bis 87 %, insbesondere 60 bis 86 %, besonders bevorzugt 75 bis 85 %,
- **A2**: 0 bis 30 %, insbesondere 1 bis 25 %, besonders bevorzugt 5 bis 15 %,
- **A3**: 10 bis 40 %, insbesondere 12 bis 35 %, besonders bevorzugt 15 bis 25 %.

Das Verhältnis der Masse des Acrylatcopolymerisats **A** zur Summe der Massen der Harze im Bindemittel und in der Pigmentpaste ist im Bereich von ca. 0,5 bis ca. 3 g/(100 g).

Die Alkyl(meth)acrylate **A1** sind Ester der Acryl- oder Methacrylsäure mit linearen, verzweigten oder cyclischen aliphatischen Alkoholen mit 6 bis 10 Kohlenstoffatomen im Alkylrest. Bevorzugt werden n-Hexylacrylat, n-Octylacrylat, 2-Äthylhexylacrylat und Decylacrylat und die entsprechenden Methacrylate. Gegebenenfalls können auch untergeordnete Mengen (bis zu 40 %) der genannten Acrylate und Methacrylate ersetzt werden durch Acryl- oder Methacrylsäure-Ester von Alkoholen mit 1 bis 18 Kohlenstoffatomen in der Alkylgruppe, durch Ester von anderen einbasigen ungesättigten Carbonsäuren wie Croton- Isocroton- und Vinylessigsäure mit den genannten Alkoholen, oder durch Di-Ester von zweibasigen ungesättigten Carbonsäuren wie Maleinsäure, Fumarsäure, Citracon- und Mesaconsäure mit den genannten Alkoholen. Besonders bevorzugt sind 2-Äthylhexylacrylat und -methacrylat.

Die gegebenenfalls einzusetzenden Hydroxyalkyl(meth)acrylate **A2** sind Ester von zweiwertigen aliphatischen Hydroxy-Verbindungen mit Acryl- oder Methacrylsäure, wobei wie oben beschrieben auch bis zu 40 % der (Meth)Acrylate durch Ester der zweiwertigen Alkohole mit anderen einbasigen ungesättigten Carbonsäuren ersetzt werden können. Bevorzugt werden Hydroxyäthylacrylat und -methacrylat, 2- und 3-Hydroxypropyl(meth)acrylat, 4-Hydroxybutylacrylat und -methacrylat; besonders bevorzugt sind Hydroxyäthylacrylat und -methacrylat.

Als Aminogruppen-haltige Monomere **A3** werden Ester der Acryl- und Methacrylsäure mit aliphatischen Hydroxyverbindungen mit 2 bis 10 Kohlenstoffatomen eingesetzt, die darüber hinaus noch mindestens eine sekundäre oder tertiäre Aminogruppe enthalten. Verbindungen mit sekundären Aminogruppen sind vorzugsweise derart sterisch gehindert, daß die Reaktivität der Aminogruppe in der radikalischen Polymerisation ausreichend herabgesetzt ist, um störende Nebenreaktionen in größerem Ausmaß auszuschließen. Verbindungen mit tertiären Aminogruppen R¹R²NR³-OH sind bevorzugt, bei denen R¹ und R² gleich oder verschieden sein können und Alkylreste mit 1 bis 4 Kohlenstoffatomen bedeuten, R³ ist ein linearer, verzweigter oder cyclischer Alkylenrest mit 2 bis 10 Kohlenstoffatomen. Wie oben kann man bis zu 40 % der Aminoalkyl(meth)acrylate ersetzen durch Ester der Aminoalkohole mit anderen einbasigen ungesättigten Carbonsäuren wie Vinylessigsäure, Croton- und Isocrotonsäure, sowie durch Bis(aminoalkylester) oder Alkyl-Aminoalkylester von zweibasigen ungesättigten Carbonsäuren wie Maleinsäure, Fumarsäure, Citracon-, Itacon- und Mesaconsäure, wobei der Alkylrest in der letzteren Alternative aus Alkylgruppen mit 1 bis 4 Kohlenstoffatomen ausgewählt wird. Bei Einsatz der Bis(aminoalkyl)ester werde vorzugsweise nur geringere Mengen von bis zu 20 % der Aminoalkyl(meth)acrylate ersetzt. Geeignete Verbindungen sind N-tert.-Butylaminoäthylacrylat, Dimethylaminoäthylacrylat, Diäthylaminoäthylacrylat, Dimethylaminopropylacrylat, 5-Diäthylamino-2-pentylacrylat und die entsprechenden Methacrylate. Besonders bevorzugt ist Dimethylaminoäthylacrylat.

Die nachfolgenden Beispiele erläutern die Erfindung. Dabei bedeuten Größenangaben mit der Einheit "%" stets Massenanteile (Masse des betreffenden Stoffes, dividiert durch die Summe der Massen aller Stoffe in der betreffenden Mischung), unter "SEG" wird der spezifische Epoxidgruppengehalt verstanden (Stoffmenge an Epoxidgruppen, dividiert durch die Masse des betreffenden Stoffes; entspricht dem Kehrwert des sog. "Epoxidäquivalentgewichts", das definiert war als (mittlere) molare Masse des betreffenden Stoffes, dividiert durch die (mittlere) Anzahl der darin vorhandenen Epoxidgruppen). Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

### Beispiel 1 Bindemittel für Pigmentpaste

### a) Herstellung eines mit Polypropylenglykol modifizierten Epoxidharz-Zwischenproduktes

In ein geeignetes Reaktionsgefäß, ausgestattet mit Rührer, Thermometer und Destillationsvorrichtung, wurden 258 g 2-Äthylhexylamin (2 mol) vorgelegt und auf 80 °C erwärmt. Bei 80 °C wurden 380 g eines aliphatischen Epoxidharzes (Basis Polypropylenglykol, Epoxidäquivalentgewicht ca. 190 g/mol; SEG ca. 5260 mmol/kg) gleichmäßig innerhalb einer Stunde zugegeben, dabei stieg die Temperatur auf 120 °C. Bei 120 °C wurde der Ansatz eine Stunde nachreagiert. Anschließend wurden 1175 g Monoäthylenglykolmonobutyläther und bei 70 °C 1900 g eines Epoxidharzes auf Bisphenol A-Basis (Epoxidäquivalentgewicht ca. 475 g/mol, SEG ca. 2100 mmol/kg) zugegeben und der Ansatz auf 120 °C erwärmt und bei dieser Temperatur 1 ½ Stunden reagiert. Das Zwischenprodukt wies einen Massenanteil an Polyoxyalkylenstruktureinheiten von 11 % und einen Massenanteil an Alkylresten mit mehr als 3 C-Atomen von 9 % auf

### b) Herstellung des Pastenharzes

Zu dem nach a) erhaltenen Zwischenprodukt wurden bei 100 °C 204 g 3-Dimethylamino-1-propylamin (2 mol) zugegeben und 1 Stunde bei 100 °C reagiert. Nach Zugabe von 314 g Monoäthylenglykolmonobutyläther und 66 g Paraformaldehyd, 91 %ig, (2 mol), wurden bei ca. 140 °C unter azeotroper Destillation mit Methylisobutylketon als Schleppmittel ca. 36 g Reaktionswasser abdestilliert. Danach wurde das Methylisobutylketon unter Vakuum entfernt und die Masse mit 774 g Monoäthylenglykolmonobutyläther auf einen Festkörper-Massenanteil von 55 % verdünnt.

### Beispiel 2

### Herstellung und Prüfung einer Pigmentpaste aus dem Produkt gemäß Beispiel 1

Das gemäß Beispiel 1 hergestellte Harz wurde unter Zugabe von 100 mmol Essigsäure je 100 g des Festharzes neutralisiert und mit deionisiertem Wasser auf einen Festkörper-Massenanteil von 14 % verdünnt.

Auf einer Laborsandmühle wurde nach dem folgenden Ansatz eine Pigmentpaste hergestellt:

| | |
|---|---|
| 1428,5 g | Bindemittel 14 %ig |
| 30 g | Farbruß |
| 225 g | Aluminiumsilikatpigment |
| 840 g | Titandioxid |
| 105 g | Bleisilikatpigment |
| 2628,5 g | Pigmentpaste 53,3 %ig |

### Beispiel 3

### Herstellung der Bindemitteldispersion

Das Bindemittel für die im Elektrotauchlack eingesetzte Bindemitteldispersion wurde auf der Basis von modifizierten Epoxidharzen analog Beispiel 1 des österreichischen Patents AT-B 353 369 hergestellt:

### 3.1 Herstellung des Bindemittels

### A) Herstellung der Komponente A

In einem mit Rührer, Thermometer, Tropftrichter und Rückflußkühler ausgestatteten Reaktionsgefäß wurden 1000 g eines Epoxidharzes auf Bisphenol A-Basis (Epoxidäquivalentgewicht ca. 500 g/mol; SEG ca. 2000 mmol/kg) in 500 g Methylisobutylketon (MIBK) bei 60 bis 70 °C gelöst und anschließend 0,2 g Hydrochinon und 168 g Methacrylsäure zugegeben. Die Temperatur wurde auf 100 bis 120 °C gesteigert und die Reaktion bei dieser Temperatur bis zu einer Säurezahl von unter 3 mg/g geführt. Anschließend wurde das Reaktionsprodukt bei 60 bis 70 °C mit 650 g eines basischen Monoisocyanats "BMI" (70%ige Lösung in MIBK eines basischen Monoisocyanats; hergestellt aus 1 mol Toluylendiisocyanat und 0,9 mol Dimethyläthanolamin, molare Masse = 254 g/mol) versetzt und solange reagiert, bis praktisch kein Isocyanat mehr nachzuweisen war.

### B) Herstellung der Komponente B

In einem mit Rührer, Thermometer, Tropftrichter und Rückflußkühler ausgestatteten Reaktionsgefäß wurden 400 g eines Epoxidharzes auf Bisphenol A-Basis (Epoxidäquivalentgewicht ca. 200 g/mol; SEG ca. 5000 mmol/kg) in 172 g MIBK gelöst und bei 60 bis 70 °C 210 g Diäthanolamin (2 mol) zugegeben. Nach beendeter Wärmeentwicklung wurde noch eine Stunde bei ca. 130 °C (Rückflußtemperatur) reagiert. In weiterer Folge wurde das Reaktionsprodukt bei 70 bis 80 °C mit 830 g eines ungesättigten Monoisocyanats "UMI" (70%ige Lösung in MIBK eines ungesättigten Monoisocyanats, hergestellt aus 1 mol Toluylendiisocyanat und 1 mol Hydroxyäthylmethacrylat, molare Masse = 304 g/mol) solange reagiert, bis praktisch kein Isocyanat mehr nachzuweisen war.

### 3.2 Herstellung der Dispersion

Die Komponenten A und B wurden bei 70 °C in einem Massenverhältnis von 80 zu 20 gründlich vermischt und mit 30 mmol Ameisensäure pro 100 g des Festharzes neutralisiert. Unter vermindertem Druck bei 80 °C wurde das Lösungsmittel MIBK größtenteils abdestilliert. In weiterer Folge wurde das Produkt unter kräftigem Rühren und bei fallender Temperatur mit deionisiertem Wasser auf ca. 45 % verdünnt. Bei dieser Konzentration wurde 2 Stunden unter Kühlung kräftig dispergiert und anschließend der Festkörper-Massenanteil bestimmt. Abschließend wurde das Produkt mit deionisiertem Wasser weiter auf 35 % verdünnt.

### Beispiel 4

### Herstellung des Copolymerisats

Das Lösungsmittel (Methoxypropanol, jeweils 33 g auf 100 g der Monomermischung) wurde in einem Reaktionskessel vorgelegt und auf ca. 85 °C erwärmt. Eine Monomerenmischung aus Alkylacrylat, gegebenenfalls Hydroxyalkylacrylat und Aminoacrylat (Zusammensetzung s. Tabelle) sowie eine Initiatorlösung (10 g einer Lösung von 20 g Azo-bis-isobutyronitril in 100 g Methoxypropanol) wurden über einen. Zeitraum von ca. 5 Stunden bei einer Temperatur von ca. 85 bis ca. 90 °C gleichmäßig zudosiert. Nach Beendigung der Zugabe wurde weitere 2 Stunden nachgerührt. Nach dieser Zeit waren die eingesetzten Monomeren vollständig polymerisiert (Nachweis über Bestimmung des Festkörper-Massenanteils). Die Produktmischung wurde auf ca. 40 °C abgekühlt, durch Zusatz der erforderlichen Säuremenge (Essigsäure) wurden die Aminogruppen vollständig neutralisiert. Die Mischung wurde mit entionisiertem Wasser auf einen Festkörper-Massenanteil von ca. 20 % verdünnt.

**Tabelle**

| Zusammensetzung der Monomermischung bei der Herstellung der Copolymeren | | |
|---|---|---|
| | Copolymerisat 4.1 | Copolymerisat 4.2 |
| 2-Äthylhexylacrylat | 80 | 75 |
| Hydroxyäthylmethacrylat | | 10 |
| Dimethylaminoäthylacrylat | 20 | 15 |

### Beispiel 5

### Herstellung einer Elektrotauchlackzusammensetzung

Gemäß der folgenden Formulierung wurde ein Badmaterial für die Elektrotauchlackierung hergestellt:

| | |
|---|---|
| 1600 g | Bindemitteldispersion gemäß Beispiel 3.2, 35 %ig |
| 28,0 g | des Copolymerisats gemäß Beispiel 4.1 bzw. 4.2 |
| 2872,5 g | deionisiertes Wasser |
| 527,5 g | Pigmentpaste, 53,3 %ig gemäß Beispiel 2 |
| 5028,0 g | Lack |

Das Copolymerisat 4.1 (ergibt den Lack 5.1) bzw. 4.2 (ergibt den Lack 5.2) wurde in den Lack gemäß der oben angegebenen Zusammensetzung eingearbeitet. Ein Vergleichslack (Lack 5.3) wurde ohne Zusatz von Copolymerisat hergestellt. Die Lacke wiesen einen Festkörper-Massenanteil von 16,8 % (ohne Copolymerisat-Zusatz) bzw. 16,9 % und einen pH-Wert von 6,0 bis 6,2 auf. Mit den Lacken wurden zinkphosphatierte Stahlbleche unter folgenden Badbedingungen beschichtet, um Schichtstärken von ca. 23 bis 25 µm zu erhalten:

| | |
|---|---|
| Badtemperatur | 28 bis 32 °C |
| Beschichtungsspannung | 300 V |
| Beschichtungszeit | 2 Minuten |

Anschließend wurde die Lackierung auf den Blechen 20 Minuten bei 180 °C Umluft-Temperatur eingebrannt.

### 6 Prüfung der Haftung

### 6.1 PVC-Haftung

Die Haftung wurde mit handelsüblichen PVC-Materialien, die als Unterbodenschutz-Masse (PVC-U) und als Nahtabdichtungsmasse (PVC-N) eingesetzt werden (Fa. Gurit-Essex), geprüft. Diese Materialien wurden mit Hilfe einer Schablone als ca. 2 cm breite, ca. 4 cm lange und ca. 0,2 cm dicke Schichten auf die elektrotauchlackierten (und eingebrannten) Bleche aufgetragen und bei 100 °C vorgeliert und danach jeweils 15 Minuten bei 125, 140 und 160 °C lang eingebrannt. Anschließend wurde an den Blechen nach Abkühlen geprüft, ob sich die PVC-Masse durch "Unterfassen" (nach Lösen einer ca. 0,5 cm langen Abschnitts von dem beschichteten Blech mit Hilfe eines scharfen Messers) von dem lackierten Blech abziehen läßt. Die Bewertungsskala ist
- +: Haftung sehr gut, PVC-Schicht reißt bei dem Versuch, sie abzuziehen, in sich
- 0: Haftung stellenweise gut, nach Abziehen der PVC-Schicht verbleiben Reste der Schicht auf mindestens 20 % der Oberfläche zurück
- -: keine Haftung, PVC-Schicht läßt sich rückstandsfrei abziehen

In der folgenden Tabelle sind die Ergebnisse zusammengefaßt:

| | PVC-U | | | PVC-N | | |
|---|---|---|---|---|---|---|
| Trocknung bei | 125°C | 140°C | 160°C | 125°C | 140°C | 160°C |
| Lack 5.1 | 0 | + | + | 0 | + | + |
| Lack 5.2 | 0 | + | + | + | + | + |
| Lack 5.3 (Vergleich) | - | - | + | - | 0 | + |

### 6.2 Füllerschicht-Haftung

Auf die elektrotauchlackierten Bleche wurde mit Hilfe eines "Aufziehwürfels" eine 6,5 cm breite, 15 cm lange und ca. 200 µm dicke Füllerschicht (handelsüblicher anthrazitfarbener wäßriger Isocyanat-härtender Füller auf Basis von wasserlöslichen PolyesterHarzen) aufgezogen, ca. 5 Minuten bei Raumtemperatur abgelüftet, 10 Minuten bei 80 °C vorgetrocknet und anschließend bei 165 °C 25 Minuten lang eingebrannt. Die nach dem Einbrennen gemessene Schichtdicke betrug ca. 32 ± 2 µm. Auf diese Füllerschicht wurde anschließend ebenfalls mit Hilfe eines Aufziehwürfels mit einer Spalthöhe von 250 µm ein schwarzer Basislack (®Aqua-Color Basecoat Brilliantschwarz der Fa. Herberts GmbH) aufgetragen, 5 Minuten beiRaumtemperatur abgelüftet, 5 Minuten bei 80 °C vorgetrocknet und schließlich 30 Minuten bei 140 °C eingebrannt. Wiederum mit einem Aufziehwürfel (200 µm Spalthöhe) wurde sodann ein 2-Komponenten-Klarlack (100 Teile des 2K-High-Solid-Klarlacks 40422 und 30 Teile des Härters 65430, beide Fa. Herberts GmbH, unmittelbar vor der Applikation vermischt) aufgetragen, 5 Minuten bei Raumtemperatur abgelüftet, und 30 Minuten bei 140 °C ausgehärtet, wonach sich eine Schichtdicke von ca. 40 µm ergab. Die Schichtdicke des gesamten Lackaufbaus betrug ca. 110 bis ca. 120 µm.

### 6.3 Basislackschicht-Haftung

Auf die elektrotauchlackierten Bleche wurde mit Hilfe eines Aufziehwürfels (Spalthöhe 250 µm) ein weißer wäßriger Basislack ("Basecoat CM 98-026-01", Versuchsprodukt der Fa. Ford-Werke AG) aufgetragen, 5 Minuten bei Raumtemperatur abgelüftet, und anschließend 10 Minuten bei 80 °C getrocknet. Es ergab sich eine Schichtdicke von ca. 25 ± 2 µm. Wiederum mit einem Aufziehwürfel (200 µm Spalthöhe) wurde sodann ein Klarlack ("PUPO-Klarlack", Versuchsprodukt der Fa. Akzo Coatings GmbH) aufgetragen, 5 Minuten beiRaumtemperatur abgelüftet, und 20 Minuten bei 140 °C ausgehärtet, wonach sich eine Schichtdicke von ca. 42 ± 2 µm ergab. Die Schichtdicke des gesamten Lackaufbaus betrug ca. 85 bis ca. 90 µm.

Die in einer Tiefkühltruhe auf ca. - 25 °C abgekühlten Bleche wurden bei dieser Temperatur mit Hilfe eines Steinschlag-Prüfgerätes der Fa. Erichsen, N Modell 508, mit 1 kg Stahlschrot gemäß der Norm VDA-Prüfblatt 621-427 bei 2 bar Luftdruck innerhalb von ca. 15 bis 20 s beschossen.

Das Beschußfeld wird anschließend gemäß der oben angegebenen Prüfvorschrift mit einer Klebefolie bedeckt; nach deren Abziehen werden Zahl und Größe der Stellen beurteilt, an denen der Lack abgeplatzt ist. Dabei bedeutet der Kennwert 1 (KW 1) keine Abplatzung des Füllers von der Elektrotauchlack-Schicht, KW 10 vollständige Ablösung der Füllerschicht. Die Zwischenwerte werden nach der insgesamt abgeplatzten Fläche eingeordnet. Die Ergebnisse sind in der folgenden Tabelle zusammengefaßt:

| | Füller F 1 | Füller F2 |
|---|---|---|
| Lack 5.1 | KW 1 | KW 1 bis KW 2 |
| Lack 5.2 | KW 2 | KW 1 |
| Lack 5.3 (Vergleich) | KW 10 | KW 7 |

## Patentansprüche

1. Verfahren zur Verbesserung der Haftung auf Lackschichten, die durch Elektrotauchlackierung mit kationisch abscheidbaren Bindemitteln auf leitfähigen Substraten und nachfolgende Trocknung und Vernetzung appliziert werden, **dadurch gekennzeichnet, daß** Acrylat-Copolymerisate **A** als Zusatz in die Elektrotauchlackbäder eingebracht werden, wobei die Polymerisate **A** erhältlich sind durch radikalisch initiierte Copolymerisation von
**A1** Alkyl(meth)acrylaten mit einem linearen, verzweigten oder cyclischen Alkylrest mit 6 bis 10 Kohlenstoffatomen,
und
**A3** Amino(meth)acrylaten mit einem linearen, verzweigten oder cyclischen Alkylrest mit 2 bis 10 Kohlenstoffatomen und mindestens einer primären, sekundären oder tertiären Aminogruppe.

2. Verfahren nach Anspruch 1, **dadurch gekennzeichnet, daß** als Komponente **A1** 2-Äthylhexylacrylat eingesetzt wird.

3. Verfahren nach Anspruch 1, **dadurch gekennzeichnet, daß** als zusätzliche Komponente
**A2** Hydroxyalkyl(meth)acrylate mit einem linearen, verzweigten oder cyclischen Alkylrest mit 1 bis 10 Kohlenstoffatomen und mindestens einer Hydroxylgruppe, eingesetzt wird.

4. Verfahren nach Anspruch 1, **dadurch gekennzeichnet, daß** als Komponente **A3** Amino(meth)acrylate mit mindestens einer tertiären Aminogruppe eingesetzt werden.

5. Verfahren nach Anspruch 3, **dadurch gekennzeichnet, daß** als Komponente **A2** Hydroxyäthylmethacrylat eingesetzt wird.

6. Verfahren nach Anspruch 1, **dadurch gekennzeichnet, daß** die Massenanteile der Monomeren in der Monomermischung für
**A1** 50 bis 87 %, und
**A3** 10 bis 40 % sind.

7. Verfahren nach Anspruch 3, **dadurch gekennzeichnet, daß** die Massenanteile der Monomeren in der Monomermischung für
**A1** 50 bis 87 %,
**A2** 1 bis 30 %, und
**A3** 10 bis 40 % sind.

8. Verfahren nach Anspruch 1, **dadurch gekennzeichnet, daß** das Verhältnis der Masse des Acrylatcopolymerisats **A** zur Summe der Massen der Harze im Bindemittel und in der Pigmentpaste von ca. 0,5 bis ca. 3 g/(100 g) beträgt.

9. Elektrotauchlacke, enthaltend Acryl-Copolymerisate A, die erhältlich sind durch radikalisch initiierte Copolymerisation von
**A1** Alkyl(meth)acrylaten mit einem linearen, verzweigten oder cyclischen Alkylrest mit 6 bis 10 Kohlenstoffatomen, gegebenenfalls
**A2** Hydroxyalkyl(meth)acrylaten mit einem linearen, verzweigten oder cyclischen Alkylrest mit 1 bis 10 Kohlenstoffatomen und mindestens einer Hydroxylgruppe, und
**A3** Amino(meth)acrylaten mit einem linearen, verzweigten oder cyclischen Alkylrest mit 2 bis 10 Kohlenstoffatomen und mindestens einer primären, sekundären oder tertiären Aminogruppe, **dadurch gekennzeichnet, daß** das Verhältnis der Masse des Acrylatcopolymerisats A zur Summe der Massen der Harze im Bindemittel und in der Pigmentpaste von ca. 0,5 bis ca. 3g/(100g) beträgt.

10. Elektrotauchlacke nach Anspruch 9, enthaltend Acryl-Copolymerisate A, die erhältlich sind durch radikalisch initiierte Copolymerisation von
**A1** 2-Äthylhexylacrylat, gegebenenfalls
**A2** Hydroxyäthyl(meth)acrylat und
**A3** Amino(meth)acrylaten mit einem linearen, verzweigten oder cyclischen Alkylrest mit 2 bis 10 Kohlenstoffatomen und mindestens einer tertiären Aminogruppe

11. Elektrotauchlacke nach Anspruch 9, wobei als Komponente **A3** Dimethylaminoäthylacrylat eingesetzt wird.

## Claims

1. A process for improving adhesion to coating layers applied by electro-dipcoating with cationically depositable binders onto conductive substrates and subsequent drying and crosslinking, **characterised in that** acrylate copolymers A are introduced as an additive to the electro-dipcoating baths, wherein the polymers A are obtainable by free-radically initiated copolymerisation of
A1 alkyl (meth)acrylates with a linear, branched or cyclic alkyl residue with 6 to 10 carbon atoms,
and
A3 amino (meth)acrylates with a linear, branched or cyclic alkyl residue with 2 to 10 carbon atoms and at least one primary, secondary or tertiary amino group.

2. A process according to claim 1, **characterised in that** 2-ethylhexyl acrylate is used as component A1.

3. A process according to claim 1, **characterised in that**
A2 hydroxyalkyl (meth)acrylates with a linear, branched or cyclic alkyl residue with 1 to 10 carbon atoms and at least one hydroxyl group
are used as an additional component.

4. A process according to claim 1, **characterised in that** amino (meth)acrylates with at least one tertiary amino group are used as component A3.

5. A process according to claim 3, **characterised in that** hydroxyethyl methacrylate is used as component A2.

6. A process according to claim 1, **characterised in that** the proportions by weight of the monomers in the monomer mixture are:
| | |
|---|---|
| A1 | 50 to 87% and |
| A3 | 10 to 40%. |

7. A process according to claim 3, **characterised in that** the proportions by weight of the monomers in the monomer mixture are:
| | |
|---|---|
| A1 | 50 to 87%, |
| A2 | 1 to 30% and |
| A3 | 10 to 40%. |

8. A process according to claim 1, **characterised in that** the ratio of the weight of the acrylate copolymer A to the sum of the weights of the resins in the binder and in the pigment paste is from approx. 0.5 to approx. 3 g/(100 g).

9. Electro-dipcoats containing acrylic copolymers A which are obtainable by free-radically initiated copolymerisation of
A1 alkyl (meth)acrylates with a linear, branched or cyclic alkyl residue with 6 to 10 carbon atoms, optionally
A2 hydroxyalkyl (meth)acrylates with a linear, branched or cyclic alkyl residue with 1 to 10 carbon atoms and at least one hydroxyl group and
A3 amino (meth)acrylates with a linear, branched or cyclic alkyl residue with 2 to 10 carbon atoms and at least one primary, secondary or tertiary amino group, **characterised in that** the ratio of the weight of the acrylate copolymer A to the sum of the weights of the resins in the binder and in the pigment paste is from approx. 0.5 to approx. 3 g/(100 g).

10. Electro-dipcoats according to claim 9 containing acrylic copolymers A which are obtainable by free-radically initiated copolymerisation of
A1 2-ethylhexyl acrylate, optionally
A2 hydroxyethyl (meth)acrylate and
A3 amino (meth)acrylates with a linear, branched or cyclic alkyl residue with 2 to 10 carbon atoms and at least one tertiary amino group.

11. Electro-dipcoats according to claim 9, wherein dimethylaminoethyl acrylate is used as component A3.

## Revendications

1. Procédé en vue de l'amélioration de l'adhésion sur des couches de vernis, qui sont appliquées par trempage électrophorétique à l'aide de liants capables d'un dépôt cationique sur des substrats conducteurs et par séchage et réticulation subséquents, **caractérisé en ce que** les copolymères d'acrylate A sont introduits en tant qu'additif dans les bains de trempage électrophorétique, les polymères A étant disponibles par l'intermédiaire de la copolymérisation, initiée par voie radicalaire,
A1 de (méth)acrylates d'alkyle avec un résidu alkyle linéaire, ramifié ou cyclique, ayant de 6 à 10 atomes de carbone,
et
A3 d'amino(méth)acrylates avec un résidu alkyle linéaire, ramifié ou cyclique, ayant de 2 à 10 atomes de carbone et au moins un groupement amino primaire, secondaire ou tertiaire.

2. Procédé selon la revendication 1, **caractérisé en ce que** l'on utilise, en tant que composant A1, l'acrylate de 2-éthylhexyle.

3. Procédé selon la revendication 1, **caractérisé en ce que** l'on utilise, en tant que composant supplémentaire:
A2 des (méth)acrylates d'hydroxyalkyle avec un résidu alkyle linéaire, ramifié ou cyclique, ayant de 1 à 10 atomes de carbone et au moins un groupement hydroxyle.

4. Procédé selon la revendication 1, **caractérisé en ce que** l'on utilise, en tant que composant A3, des amino(méth)acrylates avec au moins un groupement amino tertiaire.

5. Procédé selon la revendication 3, **caractérisé en ce que** l'on utilise, en tant que composant A2, le méthacrylate d'hydroxyéthyle.

6. Procédé selon la revendication 1, **caractérisé en ce que** les proportions massiques des monomères dans le mélange de monomères sont
pour A1 de 50 à 87 %, et
pour A3 de 10 à 40 %.

7. Procédé selon la revendication 3, **caractérisé en ce que** les proportions massiques des monomères dans le mélange de monomères sont
pour A1 de 50 à 87%, et
pour A2 de 1 à 30 %, et
pour A3 de 10 à 40%.

8. Procédé selon la revendication 1, **caractérisé en ce que** le rapport de la masse du copolymère d'acrylate A à la somme des masses des résines dans le liant et dans la pâte pigmentaire est d'environ 0,5 à environ 3 g/(100 g).

9. Vernis électrophorétiques, contenant des copolymères acryliques A, que l'on peut obtenir par une copolymérisation initiée par voir radicalaire
A1 de (méth)acrylates d'alkyle avec un résidu alkyle linéaire, ramifié ou cyclique, ayant de 6 à 10 atomes de carbone, le cas échéant,
A2 de (méth)acrylates d'hydroxyalkyle avec un résidu alkyle linéaire, ramifié ou cyclique, ayant de 1 à 10 atomes de carbone et au moins un groupement hydroxyle, et
A3 d'amino(méth)acrylates avec un résidu alkyle linéaire, ramifié ou cyclique, ayant de 2 à 10 atomes de carbone et au moins un groupement amino primaire, secondaire ou tertiaire, **caractérisé en ce que** le rapport de la masse du copolymère d'acrylate A à la somme des masses des résines dans le liant et dans la pâte pigmentaire est d'environ 0,5 à environ 3 g/(100 g).

10. Vernis électrophorétiques selon la revendication 9, contenant des copolymères acryliques A, que l'on peut obtenir par une copolymérisation initiée par voir radicalaire
A1 d'acrylate de 2-éthylhexyle, le cas échéant,
A2 de (méth)acrylate d'hydroxyéthyle et
A3 d'amino(méth)acrylates avec un résidu alkyle linéaire, ramifié ou cyclique, ayant de 2 à 10 atomes de carbone et au moins un groupement amino tertiaire.

11. Vernis électrophorétiques selon la revendication 9, l'acrylate de diméthylaminoéthyle étant utilisé en tant que composant A3.
